# FASCICULE DE BREVET EUROPEEN

(11) **EP 1 254 796 B1**
(45) Date de publication et mention de la délivrance du brevet: **05.10.2005**
(21) Numéro de dépôt: 02291041.8
(22) Date de dépôt: 24.04.2002
(51) Int. Cl.: B60H 3/06, B60H 1/00

(54) **Dispositif de filtration destiné à équiper un appareil d'aération et/ou de chauffage et/ou de climatisation, notamment pour véhicule automobile, et appareil comportant un tel dispositif**
Filtervorrichtung für ein Gerät zur Belüftung und/oder zur Beheizung und/oder zur Klimatisierung, insbesondere für ein Kraftfahrzeug und Gerät mit solch einer Filtervorrichtung
Filtration device for an apparatus for ventilating and/or heating and/or air conditioning, especially for a motor vehicle and the apparatus with such a device

(30) Priorité: 30.04.2001 FR 0105823
(43) Date de publication de la demande: 06.11.2002
(73) Titulaire: Valeo Matériaux de Friction, 87020 Limoges cedex 9 (FR)
(72) Inventeur: Simon, Olivier, 14123 Ifs (FR); Fontaine, Arnaud, 50880 La Meauffe (FR)

(56) Documents cités:
- FR-A- 2 505 268
- FR-A- 2 759 325
- FR-A- 2 775 635
- US-A- 5 902 361

## Description

La présente invention a pour objet un dispositif de filtration destiné à équiper un appareil d'aération et/ou de chauffage et/ou de climatisation, notamment pour véhicule automobile, ainsi que l'appareil comportant un tel dispositif.

Le but de l'invention est de proposer un disposer de filtration muni de moyens propres à assurer son étanchéité par rapport à l'appareil dans lequel il est installé.

De tels dispositifs de filtration, comme montrés dans FR 2 759 325, comprennent généralement un cadre entourant au moins partiellement un média filtrant, et sont pourvus d'un joint d'étanchéité, par exemple en mousse, qui assure sa fonction d'étanchéité en étant comprimé lorsque le dispositif est monté dans l'appareil. FR 2 741 568 montre également un dispositif de filtration avec un joint d'étanchéité composé d'une lèvre assortie d'une jupe.

Cependant, l'emploi d'un tel joint s'avère coûteux et l'on a en outre constaté une détérioration de celui-ci au cours du temps, suite notamment aux opérations répétées de montage et démontage du dispositif par rapport à l'appareil.

Par ailleurs, l'utilisation d'une pièce supplémentaire nécessite une opération particulière pour son installation sur le dispositif de filtration.

L'invention a pour but de remédier à au moins un de ces inconvénients.

L'invention vise ainsi un dispositif de filtration destiné à équiper un appareil d'aération et/ou de chauffage et/ou de climatisation, notamment pour véhicule automobile, comportant un cadre entourant au moins partiellement un média filtrant et des moyens d'étanchéité, le cadre comportant des moyens de verrouillage aptes à coopérer avec l'appareil lorsque le dispositif est monté dans ce dernier, caractérisé par le fait que les moyens d'étanchéité sont constitués d'une lame flexible dont est muni le cadre, les moyens de verrouillage étant aptes à maintenir la lame en position déformée pour qu'elle assure une fonction d'étanchéité tout en empêchant le démontage du dispositif.

Avantageusement, la coopération des moyens de verrouillage du dispositif avec l'appareil permet de maintenir la lame flexible dans une position déformée contre l'appareil, assurant ainsi la fonction d'étanchéité souhaitée entre cet appareil et l'extérieur.

Selon une caractéristique, les moyens de verrouillage sont assujettis à une partie du dispositif qui est susceptible de se déformer, sous l'action d'un effort extérieur, dans une direction dite transversale qui est perpendiculaire à la direction générale longitudinale de déplacement du dispositif de filtration pour son montage et démontage dans l'appareil, lesdits moyens de verrouillage ayant une extension transversale.

Ainsi, en déformant de l'extérieur une partie du dispositif de filtration, on peut déverrouiller ce dispositif et ainsi le démonter.

Selon une caractéristique, le dispositif comporte dans sa partie déformable au moins deux organes de préhension disposés longitudinalement et de façon symétrique par rapport à un plan médian qui est perpendiculaire à la direction transversale de déformation de ces organes, au moins un moyen de verrouillage étant agencé dans l'alignement de chacun desdits au moins deux organes de préhension.

Ces organes de préhension facilitent le montage et le démontage du dispositif dans l'appareil.

Selon une autre caractéristique, la lame flexible est plane et s'étend, à l'état libre, perpendiculairement à la direction générale longitudinale de déplacement du dispositif de filtration pour son montage et démontage dans l'appareil.

Plus particulièrement, la lame flexible entoure périphériquement un support au moins partiellement déformable transversalement.

Selon une autre caractéristique, les moyens de verrouillage sont assujettis au support et font saillie transversalement par rapport à ce support.

Selon une caractéristique, les moyens de verrouillage sont des moyens d'encliquetage.

De tels moyens sont avantageux dans la mesure où ils sont simples à mettre en oeuvre, et en outre, peuvent être obtenus par moulage en une seule opération avec l'ensemble du dispositif de filtration.

Ainsi, cela ne nécessite pas l'emploi d'une pièce supplémentaire pour assurer le verrouillage du dispositif dans l'appareil.

Selon une caractéristique, le dispositif comporte au moins un organe de préhension qui permet, en se déformant sous l'action d'un effort extérieur, de déverrouiller les moyens de verrouillage.

La présente invention a également pour objet un appareil d'aération et/ou de chauffage et/ou de climatisation, notamment pour véhicule automobile, ledit appareil étant équipé d'un dispositif de filtration qui comporte un cadre entourant au moins partiellement un média filtrant et des moyens d'étanchéité, ledit appareil comportant un boîtier dans lequel est monté le dispositif et ayant une face inclinée dite d'appui, caractérisé par le fait que les moyens d'étanchéité sont constitués d'une lame flexible dont le cadre est muni, ladite lame flexible étant maintenue dans une position déformée contre la face d'appui pour qu'elle assure une fonction d'étanchéité.

Ainsi, il n'est pas nécessaire de prévoir une pièce supplémentaire telle qu'un joint en mousse avec tous les inconvénients que cela comporte.

Le maintien de la lame flexible contre une face inclinée d'appui assure la fonction d'étanchéité désirée.

Selon une caractéristique, le dispositif de filtration comporte des moyens de verrouillage qui coopèrent avec des moyens de retenue du boîtier afin de maintenir la lame en position déformée contre la face d'appui, tout en empêchant le démontage du dispositif.

Selon une caractéristique, le boîtier comporte une paroi dans laquelle est pratiquée une ouverture pour l'introduction du dispositif de filtration dans l'appareil suivant une direction générale longitudinale XX'.

Selon une caractéristique, une collerette est aménagée sur la paroi à la périphérie de l'ouverture, du côté extérieur au boîtier, ladite collerette ayant une face inclinée qui constitue la face d'appui contre laquelle vient se positionner la lame flexible.

Selon une caractéristique, une face d'entrée inclinée est prévue à la périphérie de l'ouverture, du côté extérieur au boîtier, pour coopérer avec les moyens de verrouillage du dispositif et faciliter l'introduction de celui-ci dans l'ouverture.

Selon une caractéristique plus particulière, la face d'entrée inclinée est confondue avec la face d'appui contre laquelle vient se positionner la lame flexible.

Par ailleurs, il est également possible que la face d'entrée inclinée soit différente de cette face d'appui contre laquelle vient se positionner la lame flexible et, dans ce cas, la face d'entrée inclinée est disposée en amont de la face d'appui dans le sens d'introduction du dispositif dans l'appareil. Selon une caractéristique, les moyens de retenue sont constitués par au moins une partie de la paroi disposée à la périphérie de l'ouverture, du côté intérieur au boîtier, de telle manière que les moyens de verrouillage sont en appui contre cette partie de la paroi tandis que la lame flexible est maintenue en position déformée contre la face d'appui.

Les dimensions intérieures du boîtier et celles de la partie du dispositif de filtration qui est logé dans le boîtier assurent que les moyens de verrouillage sont fermement appuyés contre la partie de la paroi constituant les moyens de retenue.

De même, la distance entre les moyens de verrouillage et la lame flexible est telle que, lorsque les moyens de verrouillage sont fermement appliqués contre la partie de la paroi concernée, la lame flexible se trouve maintenue en position déformée contre la face d'appui du boîtier.

Selon une caractéristique, la paroi présente à la périphérie de l'ouverture une face inclinée disposée du côté intérieur au boîtier, entre l'ouverture et les moyens de retenue afin de faciliter le déverrouillage des moyens de verrouillage.

L'appareil comprend également un dispositif qui comporte au moins l'une des caractéristiques énoncées ci-dessus en référence au dispositif seul et qui est prise en combinaison avec l'une au moins des caractéristiques énoncées ci-dessus en référence à l'appareil.

D'autres caractéristiques et avantages de l'invention apparaîtront dans la description ci-après d'un exemple de réalisation, en référence aux dessins annexés dans lesquels :
- la figure 1 est une vue schématique en perspective d'un dispositif de filtration selon l'invention montrant le dispositif installé dans l'appareil ;
- la figure 2 est une vue à plus grande échelle du dispositif de la figure 1 en perspective et en coupe selon II-II ;
- la figure 3 est une vue à plus grande échelle selon la flèche III de la partie gauche du dispositif de la figure 2 ;
- les figures 4a à 4c sont des vues partielles montrant la mise en place, figures 4a et 4b, et le retrait, figure 4c, du dispositif.

Le dispositif de filtration 10 selon l'invention est monté à l'intérieur d'un appareil, par exemple, de climatisation 12 dont on a représenté partiellement le boîtier 14.

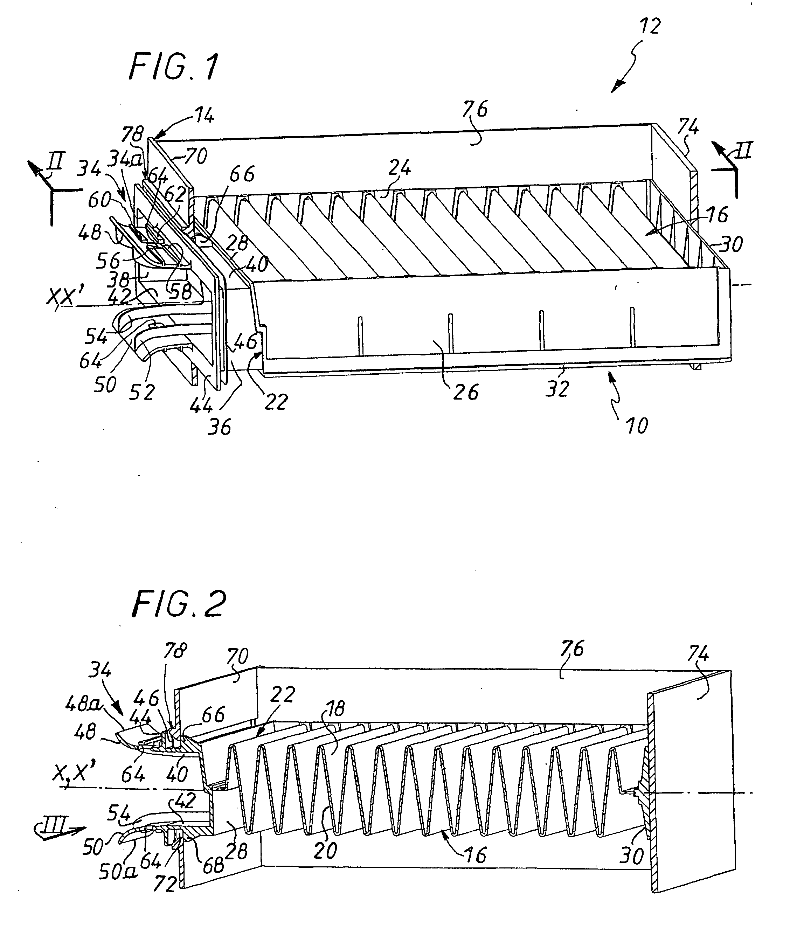

Ce dispositif comporte un média filtrant 16 formant filtre à particules, formé d'un mat de non tissé 18, figure 2, constitué d'un voile de carde en une nappe unique. Le média filtrant 16 est plissé.

Ledit mat de non tissé 18 est à base de fibres longues dont la longueur est, de préférence, au moins égale à 38 mm. Lesdites fibres longues présentent un diamètre moyen égal ou supérieur à 1µm. Lesdites fibres sont en matériau thermoplastique et, en pratique, en polypropylène.

Le mat de non tissé 18 est associé à une grille 20, figure 2, par exemple en polypropylène. Celle-ci se trouve placée en aval par rapport au sens de circulation de l'air dans le dispositif de filtration 10.

Le média filtrant 16 peut être associé à deux grilles, plissées.

Cette ou ces grilles sont solidarisées ou non au mat de non tissé 18 ; lorsqu'elles sont solidarisées audit mat, cette solidarisation, qui peut n'être que partielle, est obtenue par exemple par soudage aux ultrasons, par collage, par consolidation mécanique, notamment au jet d'eau, ou autre.

Le dispositif de filtration 10 peut constituer un filtre à particules, ou un filtre dit combiné, c'est-à-dire à la fois un filtre à particules et un filtre arrêtant des gaz délétères. Dans ce cas, sont ajoutés des moyens d'adsorption de gaz.

Lesdits moyens d'adsorption de gaz peuvent comporter un lit de charbon activé, ou un tissu de carbone souple plissé de la même manière que le média filtrant 16.

Un cadre 22 est prévu pour supporter les différents constituants du dispositif de filtration.

Le cadre 22 comprend deux parois latérales 24, 26 s'étendant longitudinalement suivant l'axe XX' par rapport au média filtrant 16, c'est-à-dire ici perpendiculairement aux lignes de pliage du média filtrant 16 plissé.

La direction longitudinale XX' correspond à la direction d'introduction du dispositif dans le boîtier 14.

D'un côté, dit côté avant, les parois latérales 24, 26 sont reliées, à l'une de leurs extrémités, par une paroi transversale dite façade transversale avant 28 et, du côté opposé, les parois 24, 26 sont reliées, à leur extrémité opposée, par une paroi transversale dite façade arrière 30.

Le média filtrant 16 est fixé aux parois transversales avant et arrière 28, 30 de manière connue.

Dans l'exemple représenté, les parois latérales 24, 26 sont munies extérieurement d'un rail de guidage 32, facilitant la mise en place du dispositif de filtration 10 dans le boîtier 14 qui présente intérieurement des rainures (non représentées) adaptées à recevoir lesdits rails 22.

Le cadre 22 se prolonge longitudinalement à partir de la paroi transversale avant 28 par un support 34 de forme sensiblement parallélépipédique et constitués de parois latérales 36, 38, 40, 42 disposées sensiblement perpendiculairement à la paroi 28.

Les parois 36 à 42 définissent un logement dont la paroi 28 constitue le fond.

Le support présente à son extrémité 34a opposée à l'extrémité en contact avec la paroi 28 une extension transversale 44 formant un rebord périphérique entourant ledit support.

Le support 34 du cadre 22 porte également une lame flexible 46 entourant périphériquement le support en aval du rebord périphérique 44 dans le sens d'introduction du dispositif dans le boîtier 14.

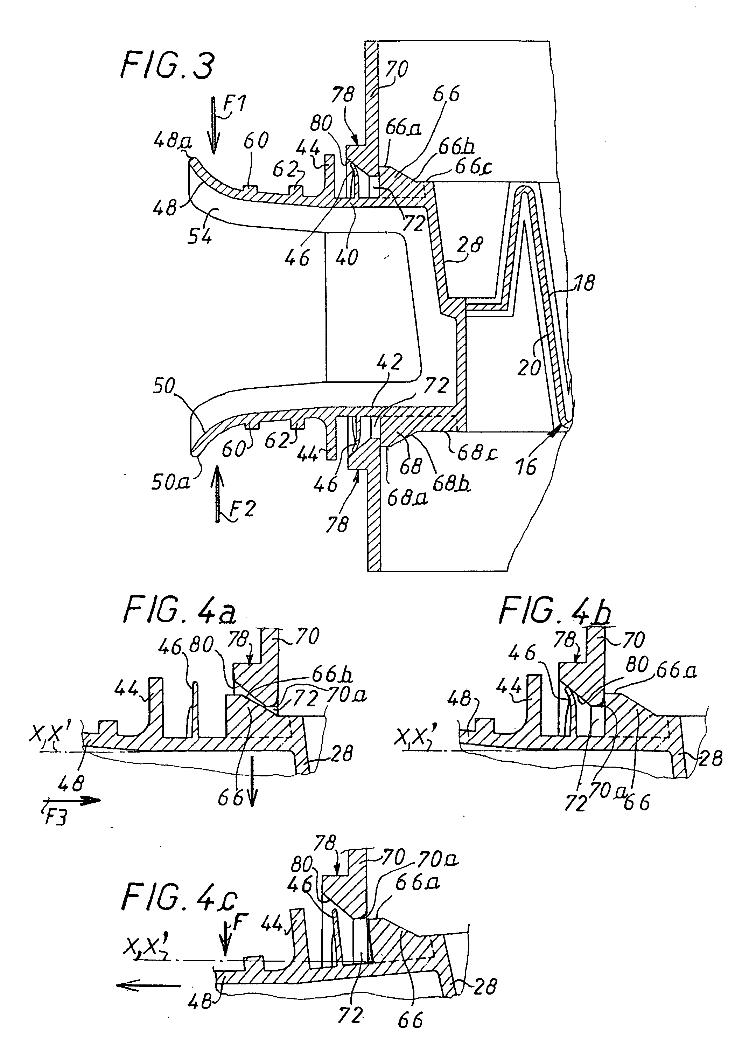

Cette lame flexible 46 est plane lorsqu'elle est en position de repos (figure 4a) et s'étend, dans cet état libre, perpendiculairement à la direction générale longitudinale XX' de déplacement du dispositif de filtration 10 pour son montage dans l'appareil et son démontage.

Il convient de noter que le rebord périphérique 44 permet de protéger la lame flexible 46 d'actions extérieures lorsque le dispositif de filtration est installé dans le boîtier 14 de l'appareil 12.

Les parois 40 et 42 du support 34 sont susceptibles de se déformer en flexion suivant une direction transversale par rapport à la direction longitudinale XX', sous l'action d'un effort extérieur transversal dirigé perpendiculairement à chacune de ces parois.

Comme représenté sur les figures, deux organes de préhension formant poignées 48, 50 sont raccordés respectivement aux parois déformables 40 et 42 dans la partie centrale de ces parois. Ces organes sont agencés de façon symétrique par rapport à un plan médian disposé longitudinalement et qui constitue un plan de symétrie pour le média filtrant 16.

Chacun de ces organes de préhension s'étend longitudinalement à partir de l'extrémité 34a où est agencé le rebord périphérique 44 vers l'extérieur du dispositif de filtration et fait ainsi saillie par rapport au dispositif de filtration.

Les organes de préhension 48 et 50 ont une faible épaisseur, ce qui leur confère une certaine flexibilité.

Deux nervures de renforcement 52, 54 parallèles entre elles s'étendent depuis l'une des extrémités libres 48a de l'organe de préhension 48 jusqu'à l'extrémité libre 50a de l'autre organe de préhension 50 en suivant un tracé inclus dans un plan longitudinal passant par la paroi 40, la paroi 28 et la paroi 42.

Comme représenté sur la figure 3, chaque nervure a sensiblement une forme de U renversé dont l'intérieur est orienté vers l'extérieur du dispositif de filtration.

Ces nervures solidarisent les poignées 48 et 50 au support 34 et confèrent ainsi à l'ensemble support-poignées une rigidité mécanique.

Par ailleurs, chaque poignée est pourvue sur sa face opposée à celle contre laquelle est agencée la nervure longitudinale d'un ensemble de nervures transversales 56, 58, 60, 62.

Cet ensemble de nervures est réparti suivant deux paires disposées de part et d'autre d'un orifice 64 destiné à permettre l'écoulement d'éventuels liquides pouvant se trouver dans le milieu ambiant où est installé le dispositif de filtration.

Les nervures 56 à 62 sont parallèles entre elles deux à deux.
Chaque organe de préhension formant poignée présente une forme courbée à son extrémité libre de telle manière que les convexités des deux organes sont disposées en vis-à-vis l'une de l'autre.

Cette configuration rend plus aisée la préhension de ces poignées par un utilisateur et l'application d'un effort sur celles-ci dans une direction transversale perpendiculaire aux parois 40 et 42.

La direction d'un des efforts appliqués par l'utilisateur sur l'organe de préhension 48 est symbolisée sur la figure 4c par la flèche notée F.

Par ailleurs, la forme donnée à ces organes de préhension facilite également la manipulation du dispositif de filtration lors de l'installation de celui-ci à l'intérieur du boîtier 14 de l'appareil 12.

On notera que les nervures 56 à 62 présentes sur chaque face externe d'un organe de préhension facilitent également leur préhension et donc l'insertion du dispositif dans le boîtier précité suivant une direction perpendiculaire à l'agencement de ces nervures.

En outre, le rebord 44 permet à l'utilisateur de caler ses doigts lors de la préhension du dispositif de filtration en vue de son insertion dans le boîtier et donc améliore la prise de l'utilisateur sur ce dispositif de filtration.

Le dispositif de filtration comporte également des moyens de verrouillage qui sont aptes à coopérer avec l'appareil dans lequel est monté le dispositif.

Plus particulièrement, ces moyens de verrouillage sont assujettis à une partie du dispositif qui est susceptible de se déformer suivant une direction transversale perpendiculaire aux parois 40 et 42 du support 34 lorsque des efforts symbolisés par les flèches F1 et F2 (figure 3) sont exercés sur les organes de préhension 48 et 50.

Les moyens de verrouillage possèdent chacun une extension transversale dans la direction de déplacement des organes de préhension.

Ces moyens de verrouillage sont solidaires du support, plus particulièrement, au moins un moyen de verrouillage est disposé dans l'alignement longitudinal de chaque organe de préhension 48, 50, de manière à ce que sous l'action d'un effort correspondant appliqué sur l'organe de préhension, le moyen de verrouillage passe d'une position dite verrouillée à une position dite déverrouillée, permettant ainsi le retrait du dispositif de filtration du boîtier 14.

Plus particulièrement, les moyens de verrouillage représentés sur les figures 1 à 4c correspondent à des moyens d'encliquetage 66, 68.

Les moyens de verrouillage peuvent également prendre la forme d'organes flexibles, telles que des pattes, qui sont agencés par exemple sur les parois latérales 34 et 36 du support 34 et qui coopèrent avec le boîtier 14 lors de l'insertion du dispositif 10 dans ce dernier.

Toutefois, il convient de noter que d'autres moyens de verrouillage peuvent être prévus sur le dispositif de filtration tels que par exemple des moyens de vissage ou des moyens de verrouillage à baïonnettes.

Comme représenté sur les figures, les moyens d'encliquetage 66 et 68 sont respectivement solidaires des parois 40 et 42.

Chaque moyen d'encliquetage 66, 68 se présente sous la forme d'un élément en saillie par rapport à la paroi 40, 42 sur laquelle il est agencé.

Chaque élément s'étend perpendiculairement par rapport à la paroi correspondante suivant une direction transversale puis s'étend ensuite longitudinalement pour former une portion longitudinale notée respectivement 66a, 68a (figure 3). Chaque élément se prolonge suivant une portion inclinée par rapport à la direction longitudinale XX' notée respectivement 66b, 68b, les pentes respectives de ces portions inclinées convergeant vers le plan de symétrie longitudinal du média filtrant 16, le profil longitudinal de l'élément saillant se terminant par une portion plane notée respectivement 66c, 68c de raccord à la paroi 28.

On notera avantageusement que l'ensemble du dispositif de filtration peut être réalisé par moulage, par injection en une seule pièce.

Il est également possible de prévoir que certains éléments du dispositif de filtration 10 puissent être surmoulés par injection, comme par exemple la lame flexible 46 et les moyens de verrouillage 66 et 68.

Différentes matières peuvent être surmoulées concomitamment, celles-ci ayant des propriétés différentes en fonction des contraintes exigées.

Le moyen d'encliquetage est particulièrement simple à mettre en oeuvre et de ce fait, s'avère peu coûteux.

Par ailleurs, directement intégré au dispositif de filtration, il évite l'emploi d'une pièce supplémentaire et donc permet de s'affranchir d'une opération de montage.

En outre, il peut être obtenu par moulage avec l'ensemble du dispositif de filtration ou par surmoulage sur ce dernier.

Le boîtier 14 de l'appareil 12 comporte une paroi transversale 70 qui fait office de paroi avant du boîtier et dans laquelle est pratiquée une ouverture 72 permettant l'introduction du dispositif de filtration dans le boîtier suivant la direction générale longitudinale XX'.

Le boîtier comporte également une autre paroi transversale 74 opposée à la paroi avant 70 et contre laquelle est agencée la paroi transversale arrière 30 du dispositif de filtration 10.

Deux parois longitudinales relient ces parois transversales entre elles et seule la paroi longitudinale 76 est représentée sur les figures 1 et 2.

Une collerette 78 est aménagée sur la face extérieure de la paroi transversale avant 70 à la périphérie de l'ouverture 72.

Cette collerette présente une face inclinée dite d'entrée 80 conférant ainsi à la collerette une forme de convergent de l'extérieur vers l'intérieur du boîtier.

On va maintenant décrire l'insertion du dispositif de filtration 10 dans le boîtier 12 et son retrait en référence aux figures 4a, 4b et 4c.

Comme représenté de manière simplifiée sur la figure 4a, le dispositif de filtration 10 est introduit suivant la direction longitudinale XX' à travers l'ouverture 72 du boîtier par un utilisateur appréhendant les poignées 48 et 50 et exerçant un effort de poussée longitudinal indiqué par la flèche F3.

Lors de cette poussée, la portion inclinée 66b du moyen d'encliquetage 66 est amenée en contact avec la face inclinée 80 de la collerette, de même que pour la portion inclinée 68b du moyen d'encliquetage 68 qui n'est pas représentée sur la figure 4a.

Les pentes de chacune des faces concernées sont les mêmes de manière à pouvoir coopérer entre elles et faciliter ainsi l'introduction du dispositif 10 à travers l'ouverture 72. En effet, en exerçant un effort longitudinal, les surfaces en contact des moyens d'encliquetage et de la collerette glissent l'une sur l'autre, ce qui finit par induire un effort de poussée vertical descendant sur la partie du support 34 qui est susceptible de se déformer, permettant ainsi d'abaisser cette partie du support et donc d'introduire le dispositif 10 dans l'ouverture 72.

On notera que le même raisonnement s'applique pour la partie du dispositif non représentée qui est symétrique de celle de la figure 4a par rapport au plan médian des poignées 48 et 50.

Sous l'action prolongée de l'effort F3, la portion longitudinale 66a du moyen d'encliquetage 66 parvient au droit de l'ouverture 72, de même que, de manière correspondante, la portion longitudinale 68a du moyen d'encliquetage 68, le support 34 et les poignées 48 et 50 étant alors dans leur état de déformation maximale.

Lorsque l'utilisateur continue d'exercer son effort de poussée, les portions longitudinales 66a et 68a des deux moyens d'encliquetage débouchent alors de l'ouverture 72 et ce mouvement peut être facilité en prévoyant une portion de paroi arrondie au débouché de l'ouverture comme représenté sur les figures 4a à 4c.

Au sortir de l'ouverture 72, les moyens d'encliquetage n'étant plus soumis à une contrainte transversale de la part du boîtier et tendant à les rapprocher l'un de l'autre, ils reprennent leur forme initiale.

L'ensemble du dispositif de filtration étant en butée contre la paroi arrière 74 du boîtier, le dimensionnement des moyens d'encliquetage 66 et 68 est tel que ceux-ci restent fermement appliqués contre la partie 70a de la face intérieure de la paroi 70 qui est disposée à la périphérie de l'ouverture 72.

L'écart longitudinal entre les moyens d'encliquetage et la lame flexible 46 est tel que lorsque ces moyens d'encliquetage se retrouvent dans la position verrouillée de la figure 4b, la lame 46 de faible épaisseur se retrouve fermement maintenue dans une position déformée contre la face inclinée 80 qui fait office de face dite d'appui pour cette lame.

Dans cette position, la lame 46, courbée sous la contrainte, assure une fonction d'étanchéité du boîtier 12 par rapport à l'extérieur.

Il convient de noter que les moyens d'encliquetage pourraient être agencés en amont de la lame flexible 46 par rapport au sens d'introduction du dispositif 10 dans le boîtier 12 et, dans ce cas, il serait nécessaire de prévoir une face supplémentaire d'entrée inclinée qui coopérerait avec la portion inclinée de chaque moyen d'encliquetage.

On notera que la partie de la face intérieure de la paroi 70 contre laquelle est appuyé chaque moyen d'encliquetage constitue un moyen de retenue du dispositif de filtration.

Avantageusement, les moyens de verrouillage et de retenue appartenant respectivement au dispositif de filtration 10 et au boîtier 14 de l'appareil 12 coopèrent entre eux, non seulement pour empêcher le retrait du dispositif hors du boîtier, mais également pour assurer l'étanchéité du système en maintenant la lame flexible sous contrainte dans une position déformée, lui permettant ainsi d'assurer l'étanchéité avec le boîtier.

Lors de l'opération de retrait du dispositif de filtration 10 par rapport au boîtier 12, l'utilisateur appuie sur les poignées en exerçant les efforts indiqués par les flèches F1 et F2 sur la figure 3 (flèche F sur la poignée 48 de la figure 4c) de manière à déformer la partie déformable du support 34 et à rapprocher l'un de l'autre les moyens d'encliquetage 66 et 68.

Dans ce mouvement, les moyens 66 et 68 glissent contre la face intérieure de la paroi 70 jusqu'à atteindre l'ouverture 72 et, sous l'action d'un effort de retrait longitudinal de la part de l'utilisateur, indiqués par la flèche horizontale dirigée vers la gauche sur la figure 4c, chaque moyen d'encliquetage est introduit dans l'ouverture 72 puis, sous l'effet prolongé de l'effort de retrait, glisse sur la face inclinée 80, permettant ainsi le déverrouillage du dispositif de filtration et son retrait hors du boîtier.

On notera toutefois qu'il peut être avantageux pour faciliter le déverrouillage du moyen d'encliquetage dans sa position représentée sur la figure 4b de prévoir entre l'ouverture et la partie de la paroi faisant office de moyen de retenue une portion inclinée plane voire une portion arrondie contre laquelle coopéreraient les portions longitudinales 66a et 68a de chaque moyen d'encliquetage.

Toutefois, il est également possible d'aménager la forme de la portion longitudinale 66a, 68a de chaque moyen d'encliquetage sous la forme d'un plan incliné ou d'une portion courbe.

On notera également que les formes des moyens d'encliquetage représentées sur les figures ne sont nullement limitatives et les moyens d'encliquetage peuvent revêtir d'autres formes et coopérer avec d'autres parties du boîtier.

Comme on le voit, l'étanchéité avec le boîtier est obtenue de façon simple, sans joint rapporté ; cette étanchéité est maintenue dans le temps, quel que soit le nombre de montages et démontages du dispositif de filtration, grâce à la flexibilité de la lame 46 et à la surface d'appui inclinée 80.

Il convient également de noter qu'au lieu des deux organes de préhension, on pourrait prévoir un seul organe central disposé sensiblement dans le plan de symétrie du média filtrant et qui déverrouillerait les moyens de verrouillage en se déformant sous l'action d'un effort exercé par l'utilisateur.

Plus généralement, un seul organe de préhension pourrait suffire pour actionner le déverrouillage en relation avec d'autres moyens de verrouillage que ceux représentés sur les figures.

La réalisation du mat de non tissé 18 peut être effectuée comme suit.

Des fibres de polypropylène d'une finesse de 1,7 dtex (diamètre 14µm) coupées à une longueur de 40 mm sont introduites dans un mélangeur.

Le mélange de fibres obtenu est ensuite introduit dans une démoteuse puis dans un silo de stockage avant d'être cardé au moyen d'une carde de type laine à double peigneur équipée d'un brouilleur de type pêle-mêle afin d'obtenir un voile de carde isotrope.

Le voile est, en sortie de carde, introduit dans un condenseur pour former une nappe.

Les paramètres de la carde et du condenseur sont choisis de manière à obtenir une nappe présentant une masse surfacique d'environ 20 à environ 150g/m².

La nappe est déposée sur un tapis puis consolidée par une opération de liage hydraulique.

L'opération de liage hydraulique consiste à faire traverser la nappe disposée sur un tambour rotatif par des jets d'eau très fins sous haute pression (40 à 200 bars).

En rebondissant sur le tambour, les jets d'eau provoquent un nouage des fibres conférant à la nappe une résistance mécanique importante sans pour autant en augmenter, de manière conséquente, la densité.

Après passage dans un tunnel de séchage, la nappe est enroulée.

La nappe est ensuite reprise pour subir une opération de plissage.

## Revendications

1. Dispositif de filtration destiné à équiper un appareil d'aération et/ou de chauffage et/ou de climatisation, notamment pour véhicule automobile, comportant un cadre (22) entourant au moins partiellement un média filtrant (16) et des moyens d'étanchéité, le cadre comportant des moyens de verrouillage (66, 68) aptes à coopérer avec l'appareil lorsque le dispositif est monté dans ce dernier, **caractérisé par le fait que** les moyens d'étanchéité sont constitués d'une lame flexible (46) dont est muni le cadre, les moyens de verrouillage étant aptes à maintenir la lame en position déformée pour qu'elle assure une fonction d'étanchéité tout en empêchant le démontage du dispositif.

2. Dispositif selon la revendication 1, **caractérisé en ce que** les moyens de verrouillage sont assujettis à une partie (34) du dispositif (10) qui est susceptible de se déformer, sous l'action d'un effort extérieur, dans une direction dite transversale qui est perpendiculaire à la direction générale longitudinale de déplacement du dispositif de filtration (10) pour son montage et démontage dans l'appareil (12), lesdits moyens de verrouillage ayant une extension transversale.

3. Dispositif selon la revendication 2, **caractérisé en ce qu'**il comporte dans sa partie déformable au moins deux organes de préhension (48, 50) disposés longitudinalement et de façon symétrique par rapport à un plan médian qui est perpendiculaire à la direction transversale de déformation de ces organes, au moins un moyen de verrouillage étant agencé dans l'alignement de chacun desdits au moins deux organes de préhension.

4. Dispositif selon l'une des revendications 1 à 3, **caractérisé en ce que** la lame flexible (46) est plane et s'étend, à l'état libre, perpendiculairement à la direction générale longitudinale de déplacement du dispositif de filtration pour son montage et démontage dans l'appareil.

5. Dispositif selon la revendication 4, **caractérisé en ce que** la lame flexible (46) entoure périphériquement un support (34) au moins partiellement déformable transversalement.

6. Dispositif selon la revendication 5, **caractérisé en ce que** les moyens de verrouillage (66, 68) sont assujettis au support (34) et font saillie transversalement par rapport à ce support.

7. Dispositif selon l'une des revendications 1 à 6, **caractérisé en ce que** les moyens de verrouillage sont des moyens d'encliquetage.

8. Dispositif selon l'une des revendications 1 à 7, **caractérisé en ce qu'**il comporte au moins un organe de préhension qui permet, en se déformant sous l'action d'un effort extérieur, de déverrouiller les moyens de verrouillage.

9. Appareil (12) d'aération et/ou de chauffage et/ou de climatisation, notamment pour véhicule automobile, ledit appareil étant équipé d'un dispositif de filtration (10) qui comporte un cadre (22) entourant au moins partiellement un média filtrant et des moyens d'étanchéité, ledit appareil comportant un boîtier (14) dans lequel est monté le dispositif et ayant une face inclinée dite d'appui (80), **caractérisé par le fait que** les moyens d'étanchéité sont constitués d'une lame flexible (46) dont le cadre est muni, le dispositif de filtration comportant des moyens de verrouillage (66, 68) qui coopèrent avec des moyens de retenue (70a) du boîtier (14) afin de maintenir la lame en position déformée contre la face d'appui pour qu'elle assure une fonction d'étanchéité tout en empêchant le démontage du dispositif.

10. Appareil selon la revendication 9, **caractérisé en ce que** le boîtier comporte une paroi (70) dans laquelle est pratiquée une ouverture (72) pour l'introduction du dispositif de filtration dans l'appareil suivant une direction générale longitudinale (XX').

11. Appareil selon la revendication 10, **caractérisé en ce qu'**une collerette (78) est aménagée sur la paroi à la périphérie de l'ouverture, du côté extérieur au boîtier, ladite collerette ayant une face inclinée (80) qui constitue la face d'appui contre laquelle vient se positionner la lame flexible.

12. Appareil selon les revendications 9 et 10, **caractérisé en ce qu'**une face d'entrée inclinée est prévue à la périphérie de l'ouverture du côté extérieur au boîtier, pour coopérer avec les moyens de verrouillage du dispositif et faciliter l'introduction de celui-ci dans l'ouverture.

13. Appareil selon la revendication 12, **caractérisé en ce que** la face d'entrée inclinée est confondue avec la face d'appui (80) contre laquelle vient se positionner la lame flexible (46).

14. Appareil selon les revendications 9 et 10, **caractérisé en ce que** les moyens de retenue sont constitués par au moins une partie (70a) de la paroi (70) disposée à la périphérie de l'ouverture, du côté intérieur au boîtier, de telle manière que les moyens de verrouillage sont en appui contre cette partie de la paroi tandis que la lame flexible (46) est maintenue en position déformée contre la face d'appui (80).

15. Appareil selon la revendication 14, **caractérisé en ce que** la paroi présente à la périphérie de l'ouverture une face inclinée disposée du côté intérieur au boîtier, entre l'ouverture et les moyens de retenue afin de faciliter le déverrouillage des moyens de verrouillage.

16. Appareil selon l'une des revendications 9 à 15, **caractérisé en ce que** les moyens de verrouillage sont des moyens d'encliquetage.

17. Appareil selon l'une des revendications 9 à 16, **caractérisé en ce que** les moyens de verrouillage sont assujettis à une partie (34) du dispositif qui est susceptible de se déformer, sous l'action d'un effort extérieur, dans une direction dite transversale qui est perpendiculaire à la direction générale longitudinale de déplacement du dispositif de filtration pour son montage et démontage dans l'appareil, lesdits moyens de verrouillage ayant une extension transversale.

18. Appareil selon l'une des revendications 9 à 17, **caractérisé en ce que** le dispositif comporte au moins un organe de préhension qui permet, en se déformant sous l'action d'un effort extérieur, de déverrouiller les moyens de verrouillage.

19. Appareil selon la revendication 17 ou 18, **caractérisé en ce qu'**il comporte dans sa partie déformable au moins deux organes de préhension (48, 50) disposés longitudinalement et de façon symétrique par rapport à un plan médian qui est perpendiculaire à la direction transversale de déformation de ces organes, au moins un moyen de verrouillage étant agencé dans l'alignement de chacun desdits au moins deux organes de préhension.

20. Appareil selon l'une des revendications 9 à 19, **caractérisé en ce que** la lame flexible (46) est plane et s'étend, à l'état libre, perpendiculairement à la direction générale longitudinale de déplacement du dispositif de filtration pour son montage et démontage dans l'appareil.

21. Appareil selon l'une des revendications 9 à 20, **caractérisé en ce que** la lame flexible (46) entoure périphériquement un support (34) au moins partiellement déformable transversalement.

22. Appareil selon la revendication 21, **caractérisé en ce que** les moyens de verrouillage (66, 68) sont assujettis au support (34) et font saillie transversalement par rapport à ce support.

## Patentansprüche

1. Filtervorrichtung zur Ausrüstung einer Belüftungs-, und/oder Heizungs- und/oder Klimaanlage, insbesondere für Kraftfahrzeuge, mit einem Rahmen (22), der wenigstens teilweise ein Filtermedium (16) umgibt, und Dichtungsmitteln, wobei der Rahmen Verriegelungsmittel (66, 68) umfasst, die in der Lage sind, mit der Anlage zusammenzuwirken, wenn die Vorrichtung in letzterer eingebaut ist, **dadurch gekennzeichnet, dass** die Dichtungsmittel aus einer biegsamen Leiste (46) bestehen, mit welcher der Rahmen versehen ist, wobei die Verriegelungsmittel in der Lage sind, die Leiste in verformter Position zu halten, damit sie eine Abdichtungsfunktion übernimmt, während sie gleichzeitig den Ausbau der Vorrichtung verhindert.

2. Vorrichtung nach Anspruch 1, **dadurch gekenn- zeichnet**, dass die Verriegelungsmittel an einem Teil (34) der Vorrichtung (10) befestigt sind, der sich unter der Einwirkung einer äußeren Kraft in einer als Querrichtung bezeichneten Richtung verformen kann, die senkrecht zur allgemeinen Längsrichtung der Verschiebung der Filtervorrichtung (10) für ihren Ein- und Ausbau in der Anlage (12) verläuft, wobei die besagten Verriegelungsmittel eine Querausdehnung aufweisen.

3. Vorrichtung nach Anspruch 2, **dadurch gekenn- zeichnet,** dass sie in ihrem verformbaren Teil wenigstens zwei Greiforgane (48, 50) umfasst, die in Längsrichtung und symmetrisch bezogen auf eine Mittelebene angeordnet sind, die senkrecht zur Verformungsquerrichtung dieser Organe verläuft, wobei wenigstens ein Verriegelungsmittel in der Fluchtrichtung jedes der besagten wenigstens zwei Greiforgane angeordnet ist.

4. Vorrichtung nach einem der Ansprüche 1 bis 3, **dadurch gekennzeichnet, dass** die biegsame Leiste (46) flach ist und sich im unbelasteten Zustand senkrecht zur allgemeinen Längsrichtung der Verschiebung der Filtervorrichtung für ihren Ein- und Ausbau in der Anlage erstreckt.

5. Vorrichtung nach Anspruch 4, **dadurch gekenn- zeichnet**, dass die biegsame Leiste (46) einen wenigstens teilweise in Querrichtung verformbaren Träger (34) umgibt..

6. Vorrichtung nach Anspruch 5, **dadurch gekenn- zeichnet**, dass die Verriegelungsmittel (66, 68) am Träger (34) befestigt sind und im Verhältnis zu diesem Träger quer vorstehen.

7. Vorrichtung nach einem der Ansprüche 1 bis 6, **dadurch gekennzeichnet, dass** die Verriegelungsmittel Einrastmittel sind.

8. Vorrichtung nach einem der Ansprüche 1 bis 7, **dadurch gekennzeichnet, dass** sie wenigstens ein Greiforgan umfasst, das durch Verformung unter der Einwirkung einer äußeren Kraft eine Entriegelung der Verriegelungsmittel ermöglicht.

9. Belüftungs- und/oder Heizungs- und/oder Klimaanlage (12), insbesondere für Kraftfahrzeuge, wobei die besagte Anlage mit einer Filtervorrichtung (10) ausgerüstet ist, die einen Rahmen (22), der wenigstens teilweise ein Filtermedium umgibt, und Dichtungsmittel umfasst, wobei die besagte Anlage ein Gehäuse (14) umfasst, in dem die Vorrichtung eingebaut ist und das eine als Auflagefläche bezeichnete geneigte Fläche (80) aufweist, **dadurch gekennzeich- net,** dass die Dichtungsmittel aus einer biegsamen Leiste (46) bestehen, mit welcher der Rahmen versehen ist, wobei die Filtervorrichtung Verriegelungsmittel (66, 68) umfasst, die mit Haltemitteln (70a) des Gehäuses (14) zusammenwirken, um die Leiste in verformter Position gegen die Auflagefläche zu halten, damit sie eine Abdichtungsfunktion erfüllt, während sie gleichzeitig den Ausbau der Vorrichtung verhindert.

10. Anlage nach Anspruch 9, **dadurch gekennzeich- net,** dass das Gehäuse eine Wand (70) umfasst, in die eine Öffnung (72) für die Einführung der Filtervorrichtung in die Anlage entlang einer allgemeinen Längsrichtung (XX') eingearbeitet ist.

11. Anlage nach Anspruch 10, **dadurch gekenn- zeichnet,** dass ein Kragen (78) an der Wand am Umfang der Öffnung auf der Außenseite des Gehäuses angeordnet ist, wobei der besagte Kragen eine geneigte Fläche (80) aufweist, die die Auflagefläche bildet, gegen welche die biegsame Leiste positioniert wird.

12. Anlage nach den Ansprüchen 9 und 10, **dadurch ge- kennzeichnet,** dass eine geneigte Eintrittsfläche am Umfang der Öffnung auf der Außenseite des Gehäuses vorgesehen ist, um mit den Verriegelungsmitteln der Vorrichtung zusammenzuwirken und ihre Einführung in die Öffnung zu erleichtern.

13. Anlage nach Anspruch 12, **dadurch gekenn- zeichnet,** dass die geneigte Eintrittsfläche mit der Auflagefläche (80) zusammenfällt, gegen welche die biegsame Leiste (46) positioniert wird.

14. Anlage nach den Ansprüchen 9 und 10, **dadurch ge- kennzeichnet,** dass die Haltemittel aus wenigstens einem Teil (70a) der Wand (70) bestehen, der am Umfang der Öffnung auf der Innenseite des Gehäuses angeordnet ist, so dass sich die Verriegelungsmittel in Anlage an diesen Teil der Wand befinden, während die biegsame Leiste (46) in verformter Position gegen die Auflagefläche (80) gehalten wird.

15. Anlage nach Anspruch 14, **dadurch gekenn- zeichnet,** dass die Wand am Umfang der Öffnung eine geneigte Fläche aufweist, die auf der Innenseite des Gehäuses zwischen der Öffnung und den Haltemitteln angeordnet ist, um die Entriegelung der Verriegelungsmittel zu erleichtern.

16. Anlage nach einem der Ansprüche 9 bis 15, **dadurch ge- kennzeichnet,** dass es sich bei den Verriegelungsmitteln um Einrastmittel handelt.

17. Anlage nach einem der Ansprüche 9 bis 16, **dadurch ge- kennzeichnet,** dass die verriegelungsmittel an einem Teil (34) der Vorrichtung (10) befestigt sind, der sich unter der Einwirkung einer äußeren Kraft in einer als Querrichtung bezeichneten Richtung verformen kann, die senkrecht zur allgemeinen Längsrichtung der Verschiebung der Filtervorrichtung für ihren Ein- und Ausbau in der Anlage verläuft, wobei die besagten Verriegelungsmittel eine Querausdehnung aufweisen.

18. Anlage nach einem der Ansprüche 9 bis 17, **dadurch gekennzeichnet, dass** die Vorrichtung wenigstens ein Greiforgan umfasst, das durch Verformung unter der Einwirkung einer äußeren Kraft die Entriegelung der Verriegelungsmittel ermöglicht.

19. Anlage nach Anspruch 17 oder 18, **dadurch gekennzeichnet, dass** sie in ihrem verformbaren Teil wenigstens zwei Greiforgane (48, 50) umfasst, die in Längsrichtung und symmetrisch bezogen auf eine Mittelebene angeordnet sind, die senkrecht zur Verformungsquerrichtung dieser Organe verläuft, wobei wenigstens ein Verriegelungsmittel in der Fluchtrichtung jedes der besagten wenigstens zwei Greiforgane angeordnet ist.

20. Anlage nach einem der Ansprüche 9 bis 19, **dadurch** g e - **kennzeichnet,** dass die biegsame Leiste (46) flach ist und sich im unbelasteten Zustand senkrecht zur allgemeinen Längsrichtung der Verschiebung der Filtervorrichtung für ihren Ein- und Ausbau in der Anlage erstreckt.

21. Vorrichtung nach einem der Ansprüche 9 bis 20, **dadurch gekennzeichnet , dass** die biegsame Leiste (46) einen wenigstens teilweise in Querrichtung verformbaren Träger (34) umgibt.

22. Vorrichtung nach Anspruch 21, **dadurch gekennzeichnet, dass** die Verriegelungsmittel (66, 68) am Träger (34) befestigt sind und im Verhältnis zu diesem Träger quer vorstehen.

## Claims

1. A filter device for a ventilating and/or heating and/or air conditioning apparatus, especially for a motor vehicle, comprising a frame (22) which at least partly surrounds a filter medium (16) and sealing means, the frame including locking means (66, 68) which are adapted to cooperate with the apparatus when the device is installed in the latter, **characterised by** the fact that the sealing means consist of a flexible web element (46) of the frame, the locking means being adapted to hold the web element in a deformed position whereby it ensures a sealing function while preventing the device from becoming detached.

2. A device according to Claim 1, **characterised in that** the locking means are applied to a portion (34) of the device (10) which is deformable under the action of an applied force, in a direction, referred to as the transverse direction, which is at right angles to the general longitudinal direction in which the filter device (10) is displaced when being fitted in and removed from the apparatus (12), the said locking means having a transverse extension.

3. A device according to Claim 2, **characterised in that** it includes, in its deformable portion, at least two gripping members (48, 50) which are disposed longitudinally and in symmetrical relationship to a central plane which lies at right angles to the transverse direction of deformation of the said members, at least one locking means being arranged in alignment with each of the said at least two gripping members.

4. A device according to one of Claims 1 to 3, **characterised in that** the flexible web element is flat and extends, in the free state, at right angles to the general longitudinal direction in which the filter device is displaced when being fitted in and removed from the apparatus.

5. A device according to Claim 4, **characterised in that** the flexible web element (46) surrounds the periphery of a support member (34), at least part of which is deformable transversely.

6. A device according to Claim 5, **characterised in that** the locking means (66, 68) are applied to the support member (34) and project transversely with respect to the said support member.

7. A device according to one of Claims 1 to 6, **characterised in that** the locking means are snap-fitting means.

8. A device according to one of Claims 1 to 7, **characterised in that** it includes at least one gripping member which, by being deformed under the action of an applied force, enables the locking means to be unlocked.

9. Ventilating and/or heating and/or air conditioning apparatus (12), especially for a motor vehicle, the said apparatus being equipped with a filter device (10) which comprises a frame (22) which at least partly surrounds a filter medium and sealing means, the said apparatus including a housing (14), in which the device is mounted and which includes an inclined face (80) referred to as an engagement face, **characterised by** the fact that the sealing means consist of a flexible web element (46) of the frame, the filter device including locking means (66, 68) which cooperate with retaining means (70a) of the housing (14) for holding the web element in a deformed position against the engagement face, whereby it ensures a sealing function while preventing the device from being detached.

10. Apparatus according to Claim 9, **characterised in that** the housing has a wall (70) in which an aperture (72) is formed for introduction of the filter device into the apparatus in a longitudinal general direction (XX').

11. Apparatus according to Claim 10, **characterised in that** a collar portion (78) is formed on the wall at the periphery of the aperture, on the outside of the housing, the said collar portion having an inclined face (80) which constitutes the engagement face against which the flexible web element becomes positioned.

12. Apparatus according to Claims 9 and 10, **characterised in that** an inclined entry face is formed at the periphery of the aperture on the outside of the housing, for cooperation with the locking means of the device and to facilitate introduction of the latter into the aperture.

13. Apparatus according to Claim 12, **characterised in that** the inclined entry face is coincident with the engagement face (80) against which the flexible web element (46) becomes positioned.

14. Apparatus according to Claims 9 and 10, **characterised in that** the retaining means consist of at least a portion (70a) of the wall (70) disposed at the periphery of the aperture in such a way that the locking means are in engagement against the said portion of the wall while the flexible web element (46) is being kept in its deformed position against the engagement face (80).

15. Apparatus according to Claim 14, characterise din that the wall has, at the periphery of the aperture, an inclined face disposed on the inside of the housing between the aperture and the retaining means, whereby to facilitate unlocking of the locking means.

16. Apparatus according to one of Claims 9 to 15, **characterised in that** the locking means are snap-fitting means.

17. Apparatus according to one of Claims 9 to 16, **characterised in that** the locking means are applied to a portion (34) of the device which is deformable under the action of an applied force in a direction referred to as the transverse direction, which is at right angles to the longitudinal general direction in which the filter device is displaced while being fitted in or removed from the apparatus, the said locking means having a transverse extension.

18. Apparatus according to one of Claims 9 to 17, **characterised in that** the device includes at least one gripping member which, by being deformed under the action of an applied force, enables the locking means to be unlocked.

19. Apparatus according to Claim 17 or Claim 18, **characterised in that** it includes, in its deformable portion, at least two gripping members (48, 50) which are disposed longitudinally and in symmetrical relationship to a central plane which lies at right angles to the transverse direction of deformation of the said members, at least one locking means being arranged in alignment with each of the said at least two gripping members.

20. Apparatus according to one of Claims 9 to 19, **characterised in that** the flexible web element is flat and extends, in the free state, at right angles to the general longitudinal direction in which the filter device is displaced when being fitted in and removed from the apparatus.

21. Apparatus according to one of Claims 9 to 20, **characterised in that** the flexible web element (46) surrounds the periphery of a support member (34), at least part of which is deformable transversely.

22. Apparatus according to Claim 21, **characterised in that** the locking means (66, 68) are applied to the support member (34) and project transversely with respect to the said support member.
